# EUROPEAN PATENT APPLICATION

(11) **EP 2 067 555 A1**
(43) Date of publication of application: **10.06.2009**
(21) Application number: 08006582.4
(22) Date of filing: 31.03.2008
(51) Int. Cl.: B23B 51/02, B28D 1/14

(54) **Drill bit**

(30) Priority: 05.12.2007 US 951135
(71) Applicant: Techtronic Industries Company Limited, Tsuen Wan New Territories Hong Kong (CN)
(72) Inventor: Chappell, Wayne, McMurray, PA 15317 (US); Richley, David William, Central (HK); Lee, Nixon Tin Chi, Tsuen Wan Centre Tsuen Wan, New Territories (HK)
(74) Representative: Martin, David John

(57) **Abstract**

A drill bit (2) comprising a body (4) including at least four flutes (20,22) being formed on and extending along a longitudinal axis of the body and a web portion disposed between the at least four flutes. The flutes define a pitch length (PL) that is substantially the same as one another and the web portion has at least one web thickness. The ratio of the web thickness to the pitch length is within a range of about 14 to 25 percent.

## Description

### BACKGROUND

The present invention relates to power tools and, in particular, to a drill bit for a power drill.

A conventional drill may be used for drilling holes in various materials. The drill typically will include a drill bit that cuts a hole and removes and discharges debris from the hole during the operation of the drill. The shape, size, and geometry of drill bits can vary depending on the type of material to be cut. For example, it is known to provide a drill bit for drilling masonry and other hard materials that includes one or more spiral grooves for carrying and discharging chips, dust and other drilling debris loosened during the drilling operation out of the hole.

In particular, when drilling masonry, cement, concrete, stone, rock, and the like, a conventional drill typically imparts a rotary motion, and may also impart a reciprocating hammer motion, to a drill bit in order to facilitate breaking up and removing the material from the hole. However, the friction between the outer surface of the drill bit and the surrounding material can adversely affect the performance of the drill, especially if the spiral groove fails to provide satisfactory removal of the drilling debris and/or the drilling debris becomes lodged in the spiral groove.

In order to help reduce friction, sometimes masonry drill bits are provided having additional spiral grooves for facilitating the discharge of drilling debris and/or reducing the surface area of the drill bit that is in contact with the material being cut. However, the geometry of the spiral grooves can impact their capacity to remove the drilling debris and to reduce friction losses.

### BRIEF SUMMARY

In one aspect of the present invention, there is provided a drill bit comprising a body including at least four flutes being formed on and extending along a longitudinal axis of the body and a web portion disposed between the at least four flutes. The flutes define a pitch length that is substantially the same as one another and the web portion has at least one web thickness. The ratio of the web thickness to the pitch length is within a range of about 14 to 25 percent.

In another aspect of the present invention, there is provided a drill bit comprising a body, including a first pair of flutes for facilitating the removal of drilling debris, a second pair of flutes for facilitating the reduction of friction, and a web portion disposed between the first pair of flutes and the second pair of flutes. The first pair of flutes defines a pitch length and the second pair of flutes defines substantially the same pitch length as the first pair of flutes. The web portion has a first web thickness defined by the first pair of flutes and a second web thickness defined by the second pair of flutes. The ratio of the second web thickness to the pitch length is within a range of about 14 to 25 percent.

In another aspect of the present invention, there is provided a method for forming a drill bit having a body. The method comprises attaching a cutting insert at one end of the body, forming a shank portion at an opposite end of the body, and forming at least four helically-shaped flutes on the body. The at least four helically-shaped flutes have a pitch length that is substantially the same as one another and define at least one web thickness of the body. The ratio of the at least one web thickness to the pitch length is within a range of about 14 to 25 percent.

Further objects, features, and advantages of the present invention will become apparent from consideration of the following description and the appended claims when taken in connection with the accompanying drawings.

### BRIEF DESCRIPTION OF THE DRAWINGS

FIG. 1 is a side of a drill bit as shown and described below;

FIG. 2 is another side of the drill bit of FIG. 1;

FIG. 3 is a front end view of the drill bit of FIG. 1;

FIG. 4 is a cross-sectional plane view of the drill bit of FIG. 1 taken through section A-A; and

FIG. 5 is a chart illustrating the relationship between different pitch lengths and web thickness for a drill bit as shown and described below.

### DETAILED DESCRIPTION

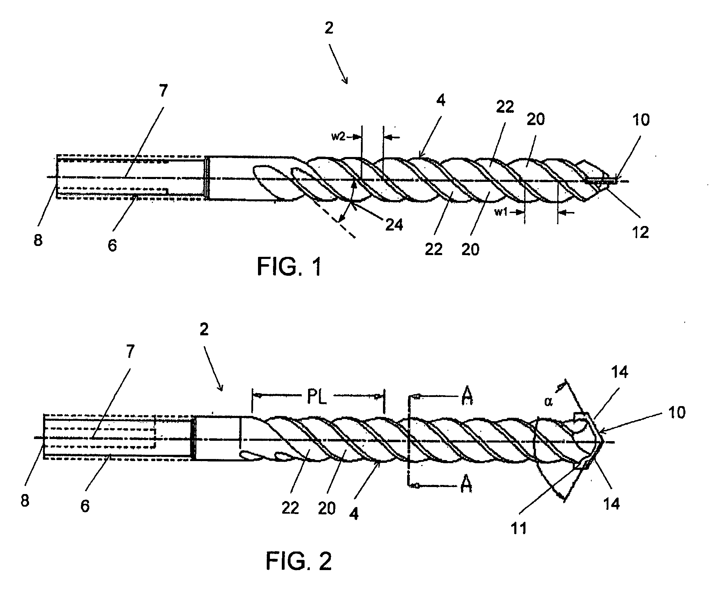

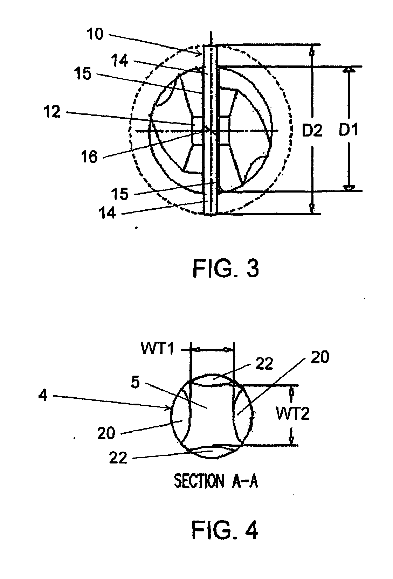

Referring to FIGS. 1-2, an embodiment of a masonry drill bit 2 is shown and described herein. The drill bit 2 has an axially-elongated, generally cylindrical body 4, and includes a shank 6 positioned at a proximal end 8 of the body 4 and a cutting insert 10 at an opposite distal end 12 thereof. The body 4 preferably has a diameter D1 (FIG. 3) that is slightly smaller than a hole to be drilled, and preferably is of a length that is longer than the depth of a hole to be drilled.

The cutting insert 10 facilitates the drilling of masonry or other material, and, by way of example, may be used with a rotary drill. Specifically, the cutting insert 10 includes a carbide plate 11 adapted for chipping or breaking up the masonry during the reciprocating action of the rotary drill. The carbide plate 11 includes a pair of faces 14, each of which defines a cutting edge 15. The faces 14 are angled with respect to each other such that the intersection of the faces 14 forms a diagonal drilling edge 16 for forming a hole in the material being drilled. In the present embodiment, the faces 14 define an included angle or point angle α (alpha) of approximately 120 degrees, as shown in FIG. 2. However, it will be readily understood that the faces 14 may be positioned differently such that the included angle has other values for drilling into different types of materials. The carbide plate 11 is preferably secured in the second end of the body 4 of the drill bit 2 by soldering or brazing. Preferably, the insert 10 has a diameter D2 that is larger than the diameter D1 of the body 4 such that the diameter of a hole cut by the cutting insert 10 will be larger than the diameter D1 of the body 4.

The shank 6 is adapted to be releasably clamped in a chuck of a power tool (not shown), such as a rotary drill. Preferably, the shank 6 is formed or machined into or from the body 4 at the proximal end 8 thereof. In one embodiment, the shank 6 may be round and may be releasably clamped in the chuck. In an alternate embodiment, the shank 6 may have one or more flat outer surfaces so as to define a non-circular profile adapted to be releasably clamped in the chuck. In yet other embodiments, the shank 6 may include a cavity that receives a mating member of the chuck. Generally, the shank 6 may have any suitable shape in order to efficiently facilitate its use with a chuck.

As shown in FIGS. 1, 2 and 4, the body 4 includes two pairs of helically-shaped grooves or flutes 20, 22 formed thereon for drilling masonry and other hard materials. The flutes 20, 22 may be formed, for example, through milling or forging. Also, the flutes 20, 22 may extend substantially along the length of the body 4 between the shank 6 and the cutting insert 10, and terminate adjacent the cutting insert 10.

Each of the flutes 20, 22 extends at a predetermined angle of inclination 24 relative to a longitudinal axis 7 of the body 4 and defines a pitch length PL, as shown in FIGS. 1 and 2. The pitch length PL of a flute is the distance between successive points of one complete turn of the flute about the longitudinal axis 7 of the body 4, for example, as shown in FIG. 2. Thus, different angles of inclination 24 correspond to different pitch lengths PL. Preferably, the flutes 20, 22 have the same angle of inclination 24, and thus define a common pitch length PL for the drill bit 2. However, the angle of inclination 24 for the flutes 20, 22 may be different for different bit types.

In the present embodiment, the two pairs of flutes 20, 22 preferably have widths w1, w2 that are different from each other, but the flutes of each pair have approximately the same width. More preferably, the width w1 of the primary flutes 20 is greater than the width w2 of the secondary flutes 22. In particular, the primary flutes 20 are the leading flutes out of the front of the carbide tip 11 and facilitate the discharge of drilling debris as the drill bit 2 is rotated. Therefore, the primary flutes 20 are made sufficiently wide to facilitate removing drilling debris out of a hole during a drilling operation. The width w1 of the primary flutes 20 may vary with the bit diameter D1 so as to provide additional capacity for debris removal for larger diameter drill bits.

During a drilling operation, unwanted friction and heat may build up between the body 4 of the drill bit 2 and the walls of a hole being drilled, which can adversely affect the performance and life the drill bit. To help alleviate this problem, the secondary flutes 22 are formed behind the primary flutes 20 to reduce the contact area between the body 4 of the drill bit 2 and material being drilled. In this way, the secondary flutes 22 act as a "shoulder" to reduce friction and heat buildup.
Preferably, the width w1 of the primary flutes 20 and the width w2 of the secondary flutes 22 will vary proportionally with the bit diameter D1.

The drill bit 2 also includes a web 5 disposed between the flutes 20, 22, as shown in FIG. 4. In particular, the web 5 corresponds generally to a longitudinally extending core portion of the body 4 that separates the flutes 20, 22. The web 5 has at least one web thickness, which refers to the smallest distance between two flutes of a bit. In the present embodiment, as shown in FIG. 4, a small web thickness WT1 refers to the width of the web 5 separating the pair of wider primary flutes 20, and a large web thickness WT2 refers to the width of the web 5 separating the pair of narrower secondary flutes 22.

In the present embodiment, the drill bit 2 has a pitch length PL that is in the range of about 0.67 to 3.20 inches. Four-fluted drill bits having a pitch length PL in this range advantageously remove drilling debris at a rate faster than bits with shorter pitch lengths during generally horizontal drilling, for example, in brick, mortar and cinder block. The faster rate of removal, in turn, further reduces friction and heat buildup that may occur during drilling. Beneficially, reducing the drill bit's exposure to friction and heat buildup can extend the life of the bit and result in faster drilling times.

It has been unexpectedly found that the effectiveness of the drill bit 2 described above in removing drilling debris and reducing friction losses may be improved for different pitch lengths PL by keeping the ratio of the large web thickness WT2 to the pitch length PL within a range of about 14 to 25 percent while maintaining a substantially constant ratio between the large web thickness WT2 and the small web thickness WT1. For example, according to one embodiment, as the pitch length PL varies from about 0.67 inches to about 3.02 inches, the ratio between the large web thickness WT2 and the small web thickness WT1 is preferably about 0.66, and the large web thickness WT2 varies with the pitch length PL in an approximately linear manner such that the ratio of the large web thickness WT2 to the pitch length PL is within range of about 14 to 25 percent, as shown in Table 1 below.

**Table 1**

| PL (inches) | Small WT1 (inches) | Large WT2 (inches) | WT2 / PL (percent) | WT1 / WT2 |
|---|---|---|---|---|
| 0.67 | 0.062 | 0.094 | 14 | 0.660 |
| 0.76 | 0.075 | 0.114 | 15 | 0.658 |
| 0.86 | 0.091 | 0.138 | 16 | 0.659 |
| 0.94 | 0.105 | 0.16 | 17 | 0.656 |
| 1.05 | 0.124 | 0.189 | 18 | 0.656 |
| 1.25 | 0.156 | 0.238 | 19 | 0.655 |
| 1.43 | 0.188 | 0.286 | 20 | 0.657 |
| 1.59 | 0.22 | 0.334 | 21 | 0.659 |
| 1.61 | 0.233 | 0.354 | 22 | 0.658 |
| 2.02 | 0.306 | 0.465 | 23 | 0.658 |
| 2.32 | 0.366 | 0.557 | 24 | 0.657 |
| 3.02 | 0.497 | 0.755 | 25 | 0.658 |

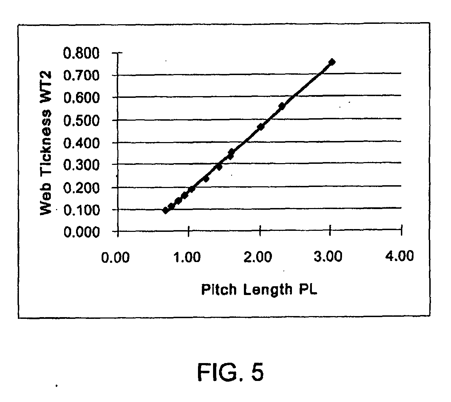

The relationship between the pitch length PL and the large web thickness WT2 for the drill bit 2 according to the present embodiment is also illustrated graphically in FIG. 5.

Although the invention has been described and illustrated with reference to specific illustrative embodiments thereof, it is not intended that the invention be limited to those illustrative embodiments. Those skilled in the art will recognize that variations and modifications can be made without departing from the true scope and spirit of the invention as defined by the claims that follow. It is therefore intended to include within the invention all such variations and modifications as fall within the scope of the appended claims and equivalents thereof.

## Claims

1. A drill bit comprising:
a body including:
at least four flutes being formed on and extending along a longitudinal axis of the body, each of the at least four flutes defining a pitch length that is substantially the same as one another; and
a web portion disposed between the at least four flutes, the web portion
having at least one web thickness,
wherein a ratio of the at least one web thickness to the pitch length is within a range of about 14 to 25 percent.

2. The drill bit of claim 1, wherein the pitch length is within a range of about 0.67 to 3.20 inches.

3. The drill bit of claim 1 or claim 2, wherein the at least four flutes include a pair of primary flutes and a pair of secondary flutes, wherein the pair of primary flutes and the pair of secondary flutes have different widths.

4. The drill bit of claim 3, wherein the at least one web thickness is defined between the pair of secondary flutes, wherein the pair of secondary flutes have a width less than the pair of primary flutes.

5. A drill bit comprising:
a body, including a first pair of flutes for facilitating the removal of drilling debris, a second pair of flutes for facilitating the reduction of friction, and a web portion disposed between the first pair of flutes and the second pair of flutes,
wherein the first pair of flutes defines a pitch length and the second pair of flutes defines substantially the same pitch length as the first pair of flutes,
wherein the web portion has a first web thickness defined by the first pair of flutes and a second web thickness defined by the second pair of flutes,
wherein a ratio of the second web thickness to the pitch length is within a range of about 14 to 25 percent.

6. The drill bit of claim 5, wherein the pitch length is within a range of about 0.67 to 3.20 inches.

7. The drill bit of claim 5 or claim 6, wherein the first pair of flutes has a first width and the second pair of flutes has a second width smaller than the first width.

8. The drill bit of claim 6 or claim 7, wherein a ratio of the first web thickness to the second web thickness is substantially the same for different pitch lengths.

9. A method for forming a drill bit having a body, comprising:
attaching a cutting insert at one end of the body;
forming a shank portion at an opposite end of the body; and
forming at least four helically-shaped flutes on the body, each having a pitch length that is substantially the same as one another,
wherein the at least four helically-shaped flutes define at least one web thickness of the body,
wherein a ratio of the at least one web thickness to the pitch length is within a range of about 14 to 25 percent.

10. The method of claim 9, wherein the at least four helically-shaped flutes are formed through a forging process.

11. The method of claim 9, wherein the at least four helically-shaped flutes are formed through a machining process.

12. The method of any one of claims 9 to 11, wherein the pitch length is within a range of about 0.67 to 3.20 inches.

13. The method of any one of claims 9 to 12, wherein the at least four helically-shaped flutes include a pair of primary flutes and a pair of secondary flutes having different widths.

14. The method of any one of claims 9 to 13, wherein the at least one web thickness is defined between the pair of secondary flutes, wherein the pair of secondary flutes have a width less than the pair of primary flutes.
